# EUROPEAN PATENT APPLICATION

(11) **EP 2 468 499 A1**
(43) Date of publication of application: **27.06.2012**
(21) Application number: 10196345.2
(22) Date of filing: 21.12.2010
(51) Int. Cl.: B32B 5/28, B32B 27/04, C08J 5/24

(54) **Improvements in composite materials**

(71) Applicant: Hexcel Composites Limited, Cambridge, Cambridgeshire CB2 4QD (GB)
(72) Inventor: The designation of the inventor has not yet been filed
(74) Representative: Willett, Christopher David

(57) **Abstract**

A prepreg comprising a single structural layer of electrically conductive unidirectional fibres and a first outer layer of curable resin substantially free of structural fibres, and optionally a second outer layer of curable resin substantially free of structural fibres, the sum of the thicknesses of the first and second outer resin layers at a given point having an average of at least 10 micrometres and varying over at least the range of from 50% to 120% of the average value, and wherein the first outer layer comprises electrically conductive particles.

## Description

### Technical Field

The present invention relates to composite materials comprising fibres and resin matrix with improved resistance to damage caused by lightning strikes.

### Background

Composite materials have well-documented advantages over traditional construction materials, particularly in providing excellent mechanical properties at very low material densities. As a result, the use of such materials is becoming increasingly widespread and their fields of application range from "industrial" and "sports and leisure" to high performance aerospace components.

Prepregs, comprising a fibre arrangement impregnated with resin such as epoxy resin, are widely used in the generation of such composite materials. Typically a number of plies of such prepregs are "laid-up" as desired and the resulting laminate is cured, typically by exposure to elevated temperatures, to produce a cured composite laminate.

A common composite material is made up from a laminate of a plurality of prepreg fibre layers, e.g. carbon fibres, interleafed with resin layers. Although the carbon fibres have some electrical conductivity, the presence of the interleaf layers means that this is only predominantly exhibited in the composite in the plane of the laminate. The electrical conductivity in the direction orthogonal to the surface of the laminate, the so-called z-direction, is low.

Practitioners in the art have a strong preference for such interleaf laminates having well defined layers of fibre separated by well defined layers of resin to produce a uniform layered laminate. It is believed that such clearly defined layers provide improved mechanical properties, especially impact resistance.

The lack of conductivity in the z-direction is generally accepted to contribute to the vulnerability of composite laminates to electromagnetic hazards such as lightning strikes. A lightning strike can cause damage to the composite material which can be quite extensive, and could be catastrophic if occurring on an aircraft structure in flight. This is therefore a particular problem for aerospace structures made from such composite materials.

A wide range of techniques and methods have been suggested in the prior art to provide lightning strike protection to such composite materials, typically involving the addition of conductive elements at the expense of increasing the weight of the composite material.

One possibility is to include conductive elements, for example fine particles, in the resin to increase the electrical conducting thereof. However, this requires a blending step which can be difficult and time consuming.

In WO 2008/056123 improvements have been made in lightning strike resistance, by adding a low level of conductive particles in the resin interleaf layers so that they can contact adjacent fibre layers and create local regions of electrical conductivity in the z-direction. However in order to achieve adequate toughness, the thickness of the interlayer must be above a certain minimum value. Thus, the electrically conductive particles must also have a size comparable to the interleaf layer.

It has been found that this approach requires particles of such a size that they present other processing difficulties, such as accelerated abrasion wear of process machinery.

There therefore remains a need in the art for a conductive composite material which is lightweight, has excellent mechanical properties, and can be processed without the above problems.

### Summary of Invention

The present inventors have found that composite materials having resin interleaf layers which vary in their thickness can provide good toughness performance whilst allowing smaller electrically conductive particles to create local regions of electrical conductivity through the interleaf.

Thus, in a first aspect, the invention relates to a prepreg comprising a single structural layer of electrically conductive unidirectional fibres and a first outer layer of curable resin substantially free of structural fibres, and optionally a second outer layer of curable resin substantially free of structural fibres, the sum of the thicknesses of the first and second outer resin layers at a given point having an average of at least 10 micrometres and varying over at least the range of from 50% to 120% of the average value, and wherein the first outer layer comprises electrically conductive particles.

If two such prepregs are laid together, the first outer resin layer of one prepreg, and if present the second outer layer of the other prepreg, form a resin interleaf layer between two layers of electrically conductive unidirectional fibres.

Thus, in a second aspect, the invention relates to a composite material comprising a first structural layer of electrically conductive unidirectional fibres, a second structural layer of electrically conductive unidirectional fibres, the first and second layers being separated by an interleaf layer comprising curable resin having an average thickness of at least 10 micrometres, the thickness of the interleaf layer varying over at least the range of from 50% to 120% of the average interleaf layer thickness, and wherein the interleaf layer comprises electrically conductive particles.

Thus, the term "interleaf layer" as used herein in the context of a composite material according to the invention, can be equally taken to mean the sum of the thicknesses of the first and second outer resin layers at a given point of a prepreg according to the present invention. Likewise, the term "average interleaf layer thickness" can be equally taken to mean the average of the sum of the thicknesses of the first and second outer resin layers at a given point of a prepreg according to the present invention Accordingly, the interleaf layer (or the sum of the thicknesses of the first and second outer resin layer) has a thickness less than 50% of the average thickness in places and a thickness of greater than 120% of the average thickness in places. For example, if the average interleaf thickness is 30 micrometres, then the interleaf thickness varies over at least the range of from 15 to 36 micrometres.

Thus a prepreg with outer resin layers, and composite material with an interleaf layer, whose thickness is not constant but varies over a wide range of thicknesses as compared to the prior art is provided.

As discussed above, the composite material according to the invention is intended to be laid up with other composite material, to form a curable composite material stack.

Thus, the composite material according to the invention may include additional layers of unidirectional structural fibres, typically separated by interleaf resin layers. Such a stack may comprise from 4 to 200 layers of unidirectional structural fibres with most or all of the layers separated by a curable thermosetting resin interleaf layer. Suitable interleaf arrangements are disclosed in EP0274899.

Typically a plurality of the interleaf layers have a varying thickness according to the present invention. In a preferred embodiment at least half of the interleaf layers have such a varying thickness. It may even be desirable for at least 75% of the interleaf layers to have such a varying thickness or even substantially all of the interleaf layers.

Additionally, typically a plurality of the structural layers will be electrically conducting, with preferably at least half being electrically conducting, more preferably at least 75% being electrically conducting, most preferably substantially all of them being electrically conducting.

It is believed that this variation in thickness provides the toughness properties to the composite material comparable to a composite material having a more regular thickness of interleaf layer. Furthermore, it is believed that the regions of low thickness allow conductive particles of smaller size to significantly or completely form an electrical connection between the two adjacent layers of electrically conductive fibres.

In a preferred embodiment the interleaf layer has a thickness that varies over at least the range of from 30% to 150% of the average thickness, more preferably over at least the range of from 15% to 175% of the average thickness, most preferably over at least the range of from 0% to 200% of the average thickness.

For the avoidance of doubt, throughout this specification, any lower value of a range may be combined with any upper value of a range without addition of subject matter.

For a material to be considered electrically conductive, it should have a volume resistivity of less than 3 x 10⁻⁵ Ωm, more preferably less than 1 x 10⁻⁷ Ωm, most preferably less than 3 x 10⁻⁸ Ωm.

The average interleaf layer thickness can be obtained by image analysis of sections through the composite material. Images of at least five slices through the composite material are to be taken and at least twenty interleaf thickness values made at evenly spaced distances, in order to generate a sample of the interleaf thickness. All of the values are then averaged by taking the mean to arrive at the average interleaf layer thickness. The minimum and maximum values sampled can be taken to provide the range over which the interleaf thickness varies. Preferably six slices are taken and 56 measurements taken every 300 microns. A similar analysis can be carried out for a prepreg according to the present invention.

For the purposes of prepregs or composite materials in a structural application, it has been found that an average interleaf thickness in the range of from 15 to 60 micrometres is desirable to provide excellent mechanical performance. For example the average interleaf thickness may be in the range of from 20 to 40 micrometres.

As discussed above, the variation in the interleaf thickness allows for smaller particles to provide local regions of electrical conductivity. Thus, preferably the electrically conductive particles have a d50 average particle size of from 10% to 80% of the average interleaf layer thickness, preferably from 20% to 70% of the average interleaf layer thickness.

The electrically conductive particles may have a d50 average particle size of from 10 to 50 micrometres, more preferably from 10 to 25 micrometres, most preferably from 10 to 20 micrometres.

As it has been found that large electrically conductive particles can give rise to processing difficulties, it is preferred that the largest particles in any distribution are kept to a minimum. Thus, preferably the electrically conductive particles have a d90 of no greater than 40 micrometres, more preferably no greater than 30 micrometres, most preferably no greater than 25 micrometres.

Also as discussed above, as the particles are capable of providing electrical conductivity to the composite material by creating local regions of electrical conductivity in the interleaf, they do not need to be present at levels as high as would be necessary to increase the electrical conductivity of the whole of the interleaf layer. Thus, preferably the electrically conductive particles are present at a level of from 0.2 to 5.0 wt% based on the amount of resin matrix in the prepreg or composite material. Preferably the particles are present at from 0.3 to 2.0 wt%, more preferably from 0.4 to 1.5 wt%.

The electrically conductive particles may be made from a wide variety of conductive materials and may take a variety of forms. For example, they may comprise metal particles, metal-coated particles, conductive polymers or carbon particles. Suitable metals include silver, nickel and copper for example. However, preferably the electrically conductive particles comprise carbon particles, as it has been found that introducing metal into composite material can be undesirable due to the possibility of corrosion effects, explosion hazards and differences in the coefficient of thermal expansion of the materials.

Carbon comes in many forms, such as graphite flakes, graphite powders, graphite particles, graphene sheets, fullerenes, carbon black and carbon nanofibres and carbon nanotubes. However, only the glassy (or vitreous) carbon particles are suitable for use in the invention. Glassy carbon is typically non-graphitizable and is at least 70% sp2 bonded, preferably at least 80%, more preferably at least 90% and most preferably essentially 100% sp2 bonded.

Glassy carbon particles are very hard and do not disintegrate during blending operations with the resin. The glassy carbon particles have very low or zero porosity and are solid throughout and are not hollow. Hollow particles, although lighter, can compromise the mechanical properties of the composite by introducing voids.

Preferably the prepreg or composite material also comprises thermoplastic toughener particles.

The thermoplastic particles provide toughness to the resulting laminate and can be made from a wide range of materials such as polyamides, copolyamides, polyimides, aramids, polyketones, polyetheretherketones, polyarylene ethers, polyesters, polyurethanes, polysulphones. Preferred materials include polyamide 6, polyamide 6/12, polyamide 11 and polyamide 12.

The thermoplastic particles may be present in a wide range of levels, however it has been found that a level of from 5 to 20% based on the total resin in the composite material, preferably from 10 to 20% is preferred.

Preferably the thermoplastic particles have a mean particle size of from 5 to 50 micrometres, preferably from 10 to 30 micrometres.

The prepreg and composite material of the present invention are predominantly composed of resin and structural fibres. Typically they comprise from 25 to 50 wt % of curable resin. Additionally they typically comprise from 45 to 75 wt % of structural fibres.

Typically the orientation of the unidirectional fibres will vary throughout the composite material, for example by arranging for unidirectional fibres in neighbouring layers to be orthogonal to each other in a so-called 0/90 arrangement, signifying the angles between neighbouring fibre layers. Other arrangements such as 0+45/-45/90 are of course possible, among many other arrangements.

The structural fibres may comprise cracked (i.e. stretch-broken), selectively discontinuous or continuous fibres.

The structural fibres may be made from a wide variety of materials, such as carbon, graphite, metallised polymers, metal-coated fibres and mixtures thereof. Carbon fibres are preferred.

Typically the fibres in the structural layer will generally have a circular or almost circular cross-section with a diameter in the range of from 2 to 20µm, preferably from 3 to 12µm.

The curable resin may be selected from epoxy, isocyanate and acid anhydride, cyanate esters, vinyl esters and benzoxazines for example. Preferably the curable resin is an epoxy resin.

Suitable epoxy resins may comprise monofunctional, difunctional, trifunctional and/or tetrafunctional epoxy resins.

Suitable difunctional epoxy resins, by way of example, include those based on; diglycidyl ether of bisphenol F, diglycidyl ether of bisphenol A (optionally brominated), phenol and cresol epoxy novolacs, glycidyl ethers of phenol-aldehyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Difunctional epoxy resins may be preferably selected from diglycidyl ether of bisphenol F, diglycidyl ether of bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl ethers, epoxidised olefins, brominated resins, triglycidyl aminophenyls, aromatic glycidyl amines, heterocyclic glycidyl imidines and amides, glycidyl ethers, fluorinated epoxy resins, or any combination thereof.

Suitable tetrafunctional epoxy resins include N,N, N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY721 from Huntsman Advanced Materials).

The curable resin may also comprise one or more curing agents. Suitable curing agents include anhydrides, particularly polycarboxylic anhydrides; amines, particularly aromatic amines e.g. 1,3-diaminobenzene, 4,4'-diaminodiphenylmethane, and particularly the sulphones and methylene bisanilines, e.g. 4,4'-diaminodiphenyl sulphone (4,4' DDS), and 3,3'-diaminodiphenyl sulphone (3,3' DDS), 4,4'-methylenebis (2-methyl-6-isopropylaniline) (M-MIPA), 4,4'-methylenebis (3-chloro-2,6-diethylene aniline) (M-CDEA), 4,4'-methylenebis (2,6 diethyleneaniline) (M-DEA) and the phenol-formaldehyde resins. Preferred curing agents are the methylene bisanilines and the amino sulphones, particularly 4,4' DDS and 3,3' DDS.

Composite materials according to the invention, as discussed above, is typically made by forming a laminate of a plurality of prepreg fibre layers. Each prepreg comprises a structured layer of electrically conductive fibres impregnated with curable resin matrix.

Thus, steps must be taken in the manufacture of the prepregs to ensure that, when laminated together, a composite material according to the invention results.

It has been found that an effective way of achieving the variation in interleaf thickness is by employing a prepreg manufacturing method where the resin and electrically conductive particles are impregnated into the structural fibres at the same time, under conditions designed to give rise to controlled disruption of the unidirectional structural fibres.

Thus, in another aspect, the invention relates to a process for the manufacture of a prepreg or composite material as herein defined comprising continuously feeding a layer of unidirectional conductive fibres, bringing into contact with a first face of the fibres a first layer of resin comprising curable resin and electrically conductive particles, and compressing the resin, conductive particles and fibres together sufficient for the resin to enter the interstices of the fibres and the resin being in sufficient amount for the resin to leave a first outer layer of resin essentially free of unidirectional conductive fibres, the first outer layer comprising the electrically conductive particles.

The resulting prepreg can then be placed in contact with another prepreg to produce the composite material according to the invention.

Preferably a second layer of resin comprising curable resin is brought into contact with a second face of the fibres, typically at the same time as the first layer, compressing the first and second layers of resin together with the fibres such that resin enters the interstices of the fibres. In this case the second layer of resin may or may not comprise electrically conductive particles, as desired. However, preferably the second layer of resin does comprise electrically conductive particles. Such a process is considered to be a one-stage process because although each face of the fibres is contacted with one resin layer, all the resin in the eventual prepreg is impregnated in one stage. As two layers of resin are employed, this is sometimes referred to as a 2-film process.

Upon compression the resin is forced into the interstices and filtration of the electrically conductive particles occurs with compression forces such that the layer of structural fibres is partially disrupted.

Known interleaf prepregs are typically produced in a two stage process. The first stage bringing the fibres into contact with resin which enters the interstices, followed by bringing into contact with another resin which comprises particulate material, typically toughener particles. This second step is intended merely to lay down the resin including particulate material to produce a uniform layered prepreg. This two stage process is considered in the prior art to be desirable because it can produce well-ordered laminates with well defined layers of fibre and resin. Often the resin is carried on two layers in each step, resulting in four resin films in total. Thus, this process is sometimes referred to as a 4-film process.

It has been found that superior results are obtainable if impregnation of resin is carried out by passing the resin and fibres over one or more impregnation rollers wherein the pressure exerted onto the conductive fibres and resin does not exceed 40 kg per centimetre of the width of the conductive fibre layer.

It is believed that high impregnation pressures conventional in the art, when applied to a one-stage process, induce too high a degree of disruption. Thus, the desired controlled disruption can arise by the combination of a one-stage impregnation process and the low pressures involved.

Resin impregnation typically involves passing the resin and fibres over rollers, which may be arranged in a variety of ways. Two primary arrangements are the simple "nip" and the "S-wrap" arrangements.

An S-wrap stage is wherein the resin and fibres, both in sheet form pass around two separated rotating rollers in the shape of the letter "S", known as S-wrap rollers. Alternative roller arrangements include the widely used "nip" wherein the fibre and resin are pinched, or nipped, together as they pass between the pinch point between two adjacent rotating rollers.

It is understood that S-wrap provides ideal conditions for reliable and reproducible impregnation of the resin between the interstices of the fibres whilst also providing sufficient disruption.

However, nip stages are also possible, provided the pressures are kept low, e.g. by control over the gap between adjacent rollers.

It has been found that although large pressures in theory provide excellent resin impregnation, they can be detrimental to the outcome of the prepreg in the one-stage process according to the invention. It has been found that resin impregnation can be unreliable and fall outside required tolerances.

Thus, the pressure exerted onto the conductive fibres and resin preferably does not exceed 40 kg per centimetre of width of the conductive fibre layer, more preferably does not exceed 35 kg per centimetre, more preferably does not exceed 30 kg per centimetre.

Following impregnation of resin into the fibres, often there is a cooling stage and further treatment stages such as laminating, slitting and separating.

To facilitate impregnation of the resin into the fibres it is conventional for this to be carried out at an elevated temperature, e.g. from 60 to 150°C preferably from 100 to 130°C, so that the resin viscosity reduces. This is most conveniently achieved by heating the resin and fibres, before impregnation, to the desired temperature, e.g. by passing them through an infra-red heater. As mentioned above, following impregnation there is typically a cooling step, to reduce the tackiness of the formed prepreg. This cooling step can be used to identify the end of the impregnation stage.

The impregnation rollers may rotate in a variety of ways. They may be freely rotating or driven.

The impregnation rollers may be made from a wide variety of materials, although they typically have a metal exterior. Chrome finished rollers have been found to be preferable.

In order to improve handling of the resin it is conventional that it is supported onto a backing material, such as paper. The resin is then fed, typically from a roll, such that it comes into contact with the fibres, the backing material remaining in place on the exterior of the resin and fibre contact region. During the subsequent impregnation process the backing material provides a useful exterior material to apply pressure to, in order to achieve even impregnation of resin.

It has been found that when the backing material is compressible the forces produced by the impregnation process on the fibre layer are reduced. This is believed to be because compressible paper will become initially compressed during impregnation and only then will the forces from the impregnation process be transferred to the fibres. Thus, non-compressible paper is preferred because it increases the forces acting on the resin and fibres during impregnation, thus creating greater disruption of the fibres and better impregnation of the resin. A suitable measure of compressibility is the ratio of the thickness of the paper to its material density, called the compressibility ratio. It has been found that backing paper with a compressibility ratio of less than 0.001 kg⁻¹m⁻² are preferred.

For example, a glassine-based calendared or super-calendared differential silicone coated release paper that has a compressibility factor 0.00083 works well compared to another paper that is not calendared or super-calendared with a compressibility factor of 0.00127. Glassine based super-calendared papers are commercially available from many sources such as Mondi and Laufenberg.

Once formed, a plurality of such prepregs can be laid together to form a composite material according to the present invention.

The composite material according to the invention is then typically cured by exposure to elevated temperatures and optionally elevated pressure to form a cured composite laminate. For example, curing may be carried out in an autoclave process of vacuum bag technique.

Such a cured composite laminate is ideal for applications requiring good mechanical performance as well as electrical conductivity, such as in the aerospace industry. In particular they are ideal for use as a primary or secondary aircraft structural member, rocket or satellite casings etc.

The invention will now be illustrated, by way of example, and with reference to the following figures, in which:
Figure 1 is an image of a section through a prior art interleaf cured laminate.
Figure 2 is an image of a section through a cured laminate according to the present invention.
Figure 3 is an image of a section through another cured laminate according to the invention.

### Examples

Prepregs (10m x 0.3m) with different amounts of carbon microspheres were manufactured by feeding a continuous layer of unidirectional carbon fibres and bringing into contact with two layers of curable resin containing the electrically conductive particles and thermoplastic toughener particles (Orgasol from Arkema) in a so-called 2 film process.

The carbon microspheres (CMS) are manufactured by HTW of Germany and are called Sigradur G. Silver coated hollow glass beads (Ag Beads) were supplied Ecka Granules of the Netherlands. Resin formulations is as used in batches 1349 and 1351 of WO 2008/040963 apart from addition of the conductive particles which occurs at the same time as the Orgasol addition.

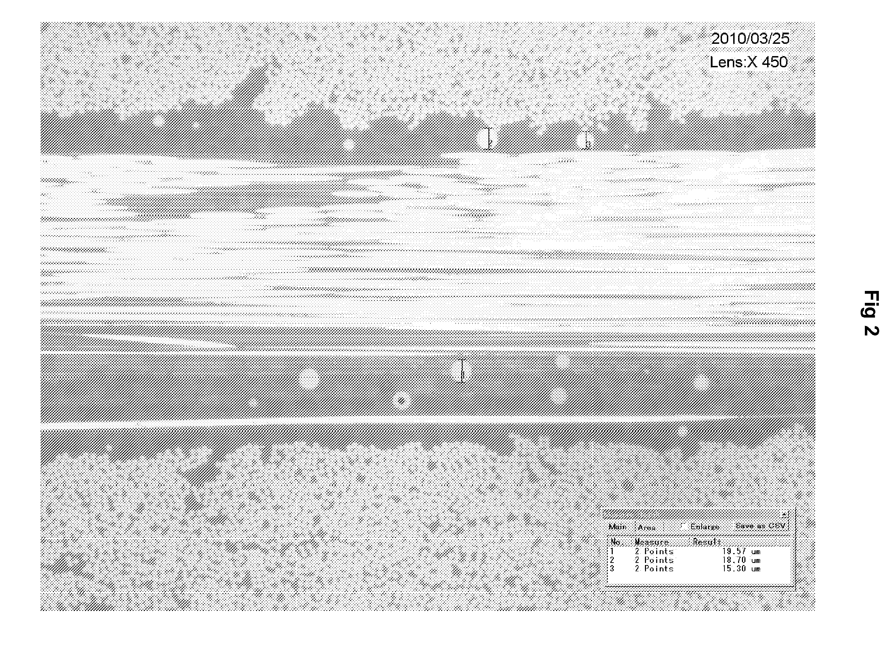

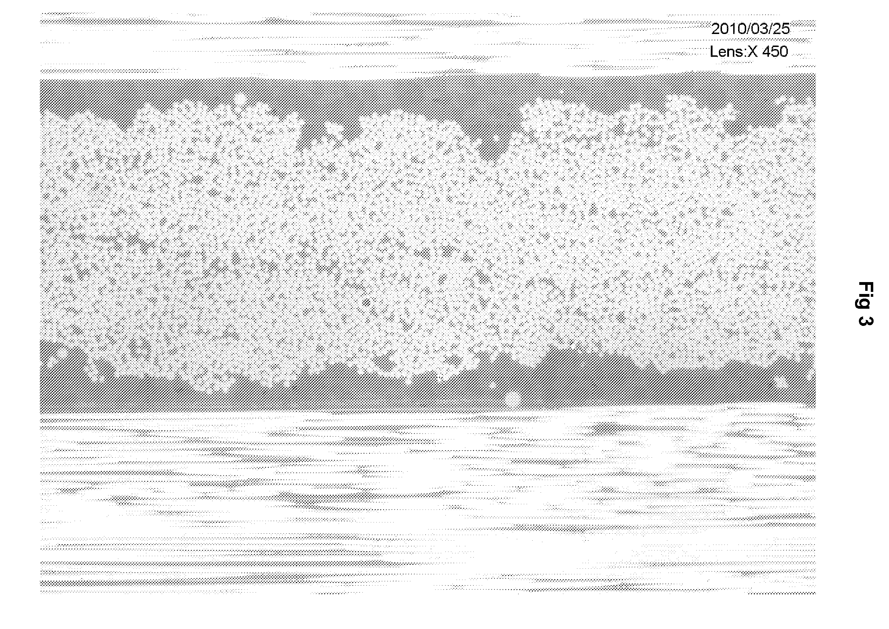

The prepreg was manufactured using IMA carbon fibre at an areal weight of 268 gsm. For resistance panels 12 ply laminates were produced using 0/90 lay-up and cured at 180°C for 2 hours in an autoclave at 3 bar pressure. Due to the controlled disruption induced dring resin impregnation, the interleaf thicknesses had an average value of about 25 micrometres and varied from 0 to 60 micrometres. Sample images of cross-sections through such laminates are shown in figures 2 and 3.

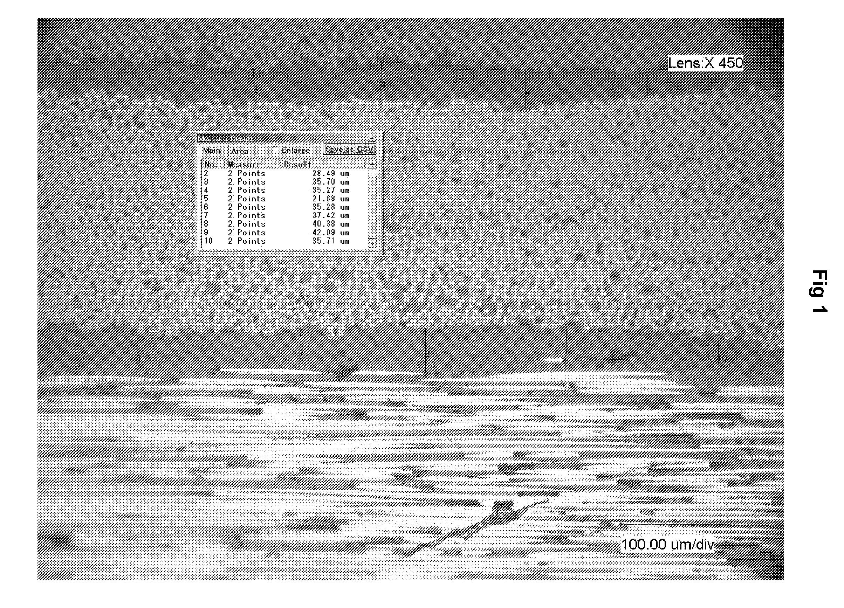

For comparison, prepregs made by a 4-film process were also prepared. In this case, even interleaf thicknesses were obtained with an average thickness of about 40 micrometres and varied from 35 to 45 micrometres. A sample image of a cross-section through such a laminate is shown in figure 1.

### Resistance of composite laminates test method

A panel is prepared by autoclave cure that is 300mm x 300mm x 3mm in size. The lay-up of the panel is 0/90. Specimens (typically four to eight) for test are then cut from the panel that are 40mm x 40mm. The square faces of the specimens should be sanded (for example on a on a Linisher machine) to expose the carbon fibres. This is not necessary if peel ply is used during the cure. Excess sanding should be avoided as this will penetrate past the first ply. The square faces are then coated with an electrically conductive metal, typically a thin layer of gold via a sputterer. Any gold or metal on the sides of the specimens should be removed by sanding prior to testing. The metal coating is required to ensure low contact resistance.

A power source (TTi EL302P programmable 30V/2A power supply unit, Thurlby Thandar Instruments, Cambridge, UK) that is capable of varying both voltage and current is used to determine the resistance. The specimen is contacted with the electrodes (tinned copper braids) of the power source and held in place using a clamp (ensure electrodes do not touch each other or contact other metallic surfaces as this will give a false result). Ensure the clamp has a non-conductive coating or layer to prevent an electrical path from one braid to the other. A current of one ampere is applied and the voltage noted. Using Ohm's Law resistance can then be calculated (V/I). The test is carried out on each of the cut specimens to give range of values. To ensure confidence in the test each specimen is tested two times.

Table 1 below shows resistance results of composite material comprising carbon and silver conductive particles at different loadings (as a % based on total resin content in the composite material)

**Table 1**

| **Panel description** | **Through thickness resistance (Ohms)** |
|---|---|
| 4 film | 5-50 |
| 2 film | 1-3 |
| 4 film + CMS(0.5 %, 10-20 µm) | 4.30 |
| 2 film + CMS (0.5 %, 10-20 µm) | 0.25-0.40 |
| 2 film + CMS (1.0 %, 10-20 µm) | 0.21-0.26 |
| 2 film + CMS (1.5 %, 10-20 µm) | 0.27 |
| 2 film + CMS (2.0 %, 10-20 µm) | 0.25 |
| 2 film + CMS (3.0 %, 10-20 µm) | 0.23 |
| 2 film + CMS (0.5 %, 20-50 µm) | 0.35-0.56 |
| 2 film + Ag beads (0.5 %, 10-40 µm) | 0.25 |
| 2 film + Ag beads (1.5 %, 10-40 µm) | 0.14 |

It is to be noted that addition of 10-20 micron conductive particles does not have a significant impact of the electrical conductivity of the 4 film prepreg where the interleaf thickness is from 35 to 45 microns.

However, the addition of 10-20 micron conductive particles significantly increases the electrical conductivity of the 2 film prepreg where the interleaf thickness is from 0 to 60 microns.

All the conductive additives lower the resistance values of 2 film with the best result being achieved for the silver coated hollow glass beads at 1.5 wt%. Acceptable results are still achieved with the CMS (10-20 µm) but loading with greater than 1 wt % does not decrease resistance further.

Furthermore, this effect is observed at very low levels of conductive particle, down as low as 0.5 wt% based on the amount of resin.

### Mechanical Performance

A further 100 metres of CMS 0.5%, 10-20µm and 20-50µm prepreg was manufactured on the production line and resistance and mechanicals determined. Mechanicals were comparable to standard laminates without the conductive particles. A cured ply thickness of 0.25mm was assumed for the 268 gsm fibre areal weight (faw) fibres. A cured ply thickness of 0.184mm was assumed for the 194 gsm fibre areal weight (faw) fibres.

**Table 2**

| **Test** | **2 film CMS (10-20) 268 gsm faw** | **2 film CMS (20-50) 268 gsm faw** | **2 film 268 gsm faw** |
|---|---|---|---|
| 0°-tensile strength MPa (ASTM D3039) | 2690 | 2797 | 3041 |
| 0°-tensile modulus GPa (ASTM D3039) | 187.2 | 190.4 | 184 |
| OHT strength (directed 40/40/20) MPa (ASTM D5766) | 749 | 761.2 | 788 |
| CAI -30J impact MPa (ASTM D7137) | 265.5 | 269 | 269 |
| IPS strength MPa (ASTM D3518) | 99 | 93 | 74 |
| IPS Modulus GPa (ASTM D3518) | 5.3 | 5.4 | 5.5 |

**Table 3**

| **Test** | **2 film (10-20) 194 gsm faw** | **2 film (20-50) 194 gsm** | **4 film 194 gsm faw** |
|---|---|---|---|
| 0°-tensile strength MPa (ASTM D3039) | 2850 | 2729 | 3312 |
| 0°-tensile modulus GPa (ASTM D3039) | 183.6 | 179.6 | 183.5 |
| OHT strength (directed 40/40/20) MPa (ASTM D5766) | 972.6 | 954 | 971 |
| CAI -30J impact MPa (ASTM D7137) | 258 | 259 | 241- 299 |
| IPS strength MPa (ASTM D3518) | 115 | 117 | 115.9 |
| IPS Modulus GPa (ASTM D3518) | 5.5 | 5.3 | 5.5 |

It can be seen that the variable thickness in the interleaf thickness does not negatively impact the mechanical properties. Additionally the presence of the electrically conductive carbon particles has no effect on mechanical performance either.

### Interleaf thickness calculation

Six specimens were cut from a cured panel obtained from the above examples and the interleaf thickness was measured (in micrometres) for each specimen every 300 microns. Measurements for each specimen were taken along one interleaf. In the table below is listed the measured individual interleaf layer thickness.

**Table 4**

| **Sample No.** | **Spec 1** | **Spec 2** | **Spec 3** | **Spec 4** | **Spec 5** | **Spec 6** |
|---|---|---|---|---|---|---|
| 1 | 67.7 | 8.9 | 32.8 | 7.2 | 34.9 | 17.4 |
| 2 | 31.9 | 30.2 | 28.9 | 29.8 | 45.5 | 22.1 |
| 3 | 30.6 | 13.2 | 23 | 5.1 | 32.8 | 28.9 |
| 4 | 25.1 | 10.2 | 22.1 | 6.8 | 30.6 | 32.3 |
| 5 | 14.9 | 17.4 | 28.9 | 6.4 | 28.1 | 18.3 |
| 6 | 9.8 | 8.1 | 21.3 | 8.9 | 10.6 | 23.4 |
| 7 | 14 | 11.1 | 20.4 | 0 | 33.6 | 11.1 |
| 8 | 27.6 | 23.8 | 53.6 | 37 | 34 | 17 |
| 9 | 37.4 | 59.5 | 58.7 | 29.3 | 19.6 | 57.8 |
| 10 | 5.1 | 30.2 | 53.6 | 37 | 6.8 | 54.4 |
| 11 | 3 | 28.1 | 51 | 35.7 | 9.4 | 31 |
| 12 | 1 | 29.3 | 44.2 | 25.9 | 16.2 | 26.4 |
| 13 | 0 | 39.5 | 31.5 | 29.3 | 10.6 | 27.6 |
| 14 | 9.8 | 48.5 | 21.7 | 25.5 | 37.8 | 23.8 |
| 15 | 14.5 | 40.4 | 15.4 | 17.4 | 19.6 | 29.8 |
| 16 | 9.4 | 27.2 | 12.3 | 20.8 | 19.1 | 40.8 |
| 17 | 0 | 20 | 15.3 | 40.4 | 27.6 | 36.6 |
| 18 | 5.1 | 14 | 4.7 | 15.3 | 25.5 | 43.8 |
| 19 | 22.6 | 28.5 | 11.1 | 30.6 | 28.9 | 19.1 |
| 20 | 16.2 | 25.1 | 29.3 | 30.2 | 14.9 | 11.1 |
| 21 | 36.6 | 43.8 | 30.6 | 31 | 29.3 | 34.4 |
| 22 | 25.5 | 17.4 | 12.8 | 8.1 | 43.4 | 22.5 |
| 23 | 41.2 | 26.8 | 14 | 17.9 | 38.7 | 21.7 |
| 24 | 20.4 | 20.2 | 11.5 | 30.6 | 16.2 | 13.6 |
| 25 | 20.8 | 10.7 | 18.3 | 19.1 | 19.6 | 12.8 |
| 26 | 21.3 | 14.9 | 4.7 | 11.5 | 19.6 | 7.7 |
| 27 | 20.4 | 18.3 | 13.6 | 22.1 | 50.6 | 16.6 |
| 28 | 9 | 18.7 | 16.6 | 37 | 43.8 | 34 |
| 29 | 31.6 | 40.8 | 21.3 | 21.7 | 32.3 | 9.8 |
| 30 | 28.1 | 17.4 | 25.1 | 21.7 | 28.1 | 6 |
| 31 | 28.1 | 24.2 | 16.2 | 29.4 | 32.8 | 5.1 |
| 32 | 43.8 | 28.1 | 35.8 | 16.6 | 48.9 | 30.6 |
| 33 | 46.3 | 22.5 | 32.3 | 17 | 37.8 | 24.7 |
| 34 | 32.7 | 23 | 7.2 | 13.2 | 25.5 | 37.4 |
| 35 | 34.9 | 0 | 24.2 | 33.2 | 21.7 | 28.5 |
| 36 | 34 | 17.9 | 43 | 0 | 37 | 40 |
| 37 | 33.2 | 23.8 | 37 | 0 | 28.1 | 13.2 |
| 38 | 23.4 | 21.3 | 15.7 | 59.5 | 26.8 | 24.2 |
| 39 | 32.3 | 6 | 12.8 | 31.5 | 20.4 | 28.5 |
| 40 | 38.7 | 12.8 | 4.3 | 23 | 30.2 | 29.3 |
| 41 | 26.2 | 23.8 | 20.4 | 15.3 | 35.3 | 11.9 |
| 42 | 28.9 | 25.9 | 14 | 25.1 | 18.7 | 6 |
| 43 | 18.3 | 21.7 | 8.1 | 25.9 | 11.9 | 10.2 |
| 44 | 21.7 | 22.5 | 31 | 13.2 | 58.7 | 6.8 |
| 45 | 57.8 | 24.2 | 28.5 | 17.4 | 45.1 | 9.8 |
| 46 | 22.5 | 8.9 | 16.6 | 31 | 38.7 | 32.7 |
| 47 | 31.9 | 17.4 | 34.9 | 24.9 | 38.3 | 37.8 |
| 48 | 24.2 | 22.1 | 34 | 25.5 | 42.5 | 28.1 |
| 49 | 15.3 | 23 | 32.3 | 11.1 | 27.6 | 18.7 |
| 50 | 11.5 | 17.9 | 62.5 | 36.1 | 0 | 26.8 |
| 51 | 45.1 | 20.4 | 29.8 | 32.3 | 21.7 | 65.5 |
| 52 | 21.7 | 13.6 | 31.5 | 41.7 | 15.3 | 35.3 |
| 53 | - | 30.2 | 17.9 | 17.9 | 11.5 | 37.5 |
| 54 | - | 21.3 | 17.9 | 17.9 | 27.3 | 29.8 |
| 55 | - | 7.2 | 26.8 | 35.7 | 7.2 | 18.7 |
| 56 | - | 24.2 | 18.3 | 28.5 | 17.4 | 14.5 |

The composite material therefore has an average interleaf layer thickness of 24.5 micrometres, with the thickness varying over the range of from 0 to 67.7 micrometres, i.e. from 0% to 276% of the average interleaf layer thickness.

## Claims

1. A prepreg comprising a single structural layer of electrically conductive unidirectional fibres and a first outer layer of curable resin substantially free of structural fibres, and optionally a second outer layer of curable resin substantially free of structural fibres, the sum of the thicknesses of the first and second outer resin layers at a given point having an average of at least 10 micrometres and varying over at least the range of from 50% to 120% of the average value, and wherein the first outer layer comprises electrically conductive particles.

2. A composite material comprising a first structural layer of electrically conductive unidirectional fibres, a second structural layer of electrically conductive unidirectional fibres, the first and second layers being separated by an interleaf layer comprising curable resin having an average thickness of at least 10 micrometres, the thickness of the interleaf layer varying over at least the range of from 50% to 120% of the average interleaf layer thickness, and wherein the interleaf layer comprises electrically conductive particles.

3. A composite material according to claim 2, which comprises further layers of unidirectional structural fibres and interleaf resin layers wherein a plurality of the interleaf layers, preferably at least half, more preferably at least 75%, most preferably substantially all of the interleaf layers are as defined in claim 2.

4. A composite material according to claim 3, wherein a plurality of the unidirectional structural layers, preferably at least half, more preferably at least 75%, most preferably substantially all of them being electrically conducting.

5. A prepreg or composite material according to any one of the preceding claims, wherein the sum of the thicknesses of the first and second outer resin layers at a given point as defined in claim 1 or the interleaf layer as defined in claim 2 has a thickness that varies over at least the range of from 30% to 150% of the average thickness, preferably over at least the range of from 15% to 175% of the average thickness, more preferably over at least the range of from 0% to 200% of the average thickness.

6. A prepreg or composite material according to any one of the preceding claims, wherein the average of the sum of the thicknesses of the first and second outer resin layers at a given point as defined in claim 1, or the average interleaf thickness of the interleaf layer according to claim 2, is in the range of from 15 to 60 micrometres, preferably in the range of from 20 to 40 micrometres.

7. A prepreg or composite material according to any one of the preceding claims, wherein the conductive particles have a d50 average particle size of from 10% to 80% of the average of the sum of the thicknesses of the first and second outer resin layers at a given point or of the average interleaf layer thickness, preferably from 20% to 70%.

8. A prepreg or composite material according to any one of the preceding claims, wherein the electrically conductive particles may have a d50 average particle size of from 10 to 30 micrometres, preferably from 10 to 25 micrometres, more preferably from 10 to 20 micrometres.

9. A prepreg or composite material according to any one of the preceding claims, wherein the electrically conductive particles have a d90 of no greater than 40 micrometres, more preferably no greater than 30 micrometres.

10. A prepreg or composite material according to any one of the preceding claims, wherein the electrically conductive particles are present at a level of from 0.2 to 5.0 wt% based on the amount of resin matrix in the prepreg or composite material, preferably the particles are present at from 0.3 to 2.0 wt%, more preferably from 0.4 to 1.5 wt%.

11. A prepreg or composite material according to any one of the preceding claims, wherein the electrically conductive particles comprise carbon particles.

12. A process for the manufacture of a prepreg according to any one of claims 1 and 3 to 11, comprising continuously feeding a layer of unidirectional conductive fibres, bringing into contact with a first face of the fibres a first layer of resin comprising curable resin and electrically conductive particles, and compressing the resin, conductive particles and fibres together sufficient for the resin to enter the interstices of the fibres and the resin being in sufficient amount for the resin to leave a first outer layer of resin essentially free of unidirectional conductive fibres, the first outer layer comprising the electrically conductive particles.

13. A process for the manufacture of a composite material according to any one of the claims 2 to 11, the process comprising the process of claim 12 followed by placing the prepreg in contact with another prepreg to produce the composite material.

14. A process according to claim 12 or 13, wherein a second layer of resin comprising curable resin is brought into contact with a second face of the fibres, at the same time as the first layer, compressing the first and second layers of resin together with the fibres such that resin enters the interstices of the fibres.

15. A process according to any one of claims 12 to 14, wherein impregnation of resin is carried out by passing the resin and fibres over one or more impregnation rollers wherein the pressure exerted onto the conductive fibres and resin does not exceed 40 kg per centimetre of the width of the conductive fibre layer.

16. A process according to claim 15, wherein the impregnation rollers comprise at least one "S-wrap" arrangement.

17. A process according to any one of claims 12 to 16, wherein the resin is carried on backing paper with a compressibility ratio of less than 0.001 kg⁻¹m⁻².

18. A cured composite material obtainable by the process of curing a composite material according to any one of claims 2 to 11 or obtainable by the process according to any one of claims 13 to 17, by exposure to elevated temperatures and optionally elevated pressure.

19. A cured composite laminate according to claim 18, which is for use as an aerospace structural member.
